# EUROPEAN PATENT APPLICATION

(11) **EP 4 403 299 A1**
(43) Date of publication of application: **24.07.2024**
(21) Application number: 21957433.2
(22) Date of filing: 14.09.2021
(51) Int. Cl.: B23Q 3/155, B23Q 3/157, B23Q 17/00

(54) **MACHINE TOOL, CONTROL METHOD, AND CONTROL PROGRAM**

(71) Applicant: DMG Mori Co., Ltd., Yamatokoriyama-shi, Nara 639-1160 (JP)
(72) Inventor: KATO, Yasutaka, Yamatokoriyama-shi Nara 639-1160 (JP)
(74) Representative: Grünecker Patent- und Rechtsanwälte PartG mbB
(86) International application number: PCT/JP2021/033695
(87) International publication number: WO 2023/042249

(57) **Abstract**

A machine tool (100) includes a magazine (150) capable of holding a plurality of tools, a machining body (40B) for machining a workpiece using at least one of the tools, and a control unit (50) for controlling the machine tool (100). The control unit (50) executes processing for acquiring tool information (224) regarding the tools. The tool information (224) defines a type and a state for each of the tools. The state includes an abnormal state and a normal state. The control unit (50) furthermore executes processing for determining, as a collection candidate tool, a tool in the abnormal state for which a tool of the same type in the normal state is not present in the magazine (150), based on the tool information (224), and predetermined processing regarding the collection candidate tool.

## Description

### Technical Field

The present disclosure relates to a machine tool, a machine tool control method, and a machine tool control program.

### Background Art

JP 2004-130451 (Patent Document 1) discloses a tool replacement time display device having a function of displaying a tool replacement time. The tool replacement time display device determines the tool replacement time in accordance with a tool replacement work load. Accordingly, with the tool replacement time display device, "even when there are a large number of cutting tools to be replaced on a line with multiple pieces of equipment, it is possible to automatically replace cutting tools in a planned and efficient manner, and prevent the case where equipment is stopped due to a cutting tool not being replaced".

### Citation List

### Patent Document

Patent Document 1: JP 2004-130451A

### Summary of Invention

### Technical Problem

When a tool in an abnormal state is present in a machine tool, if a tool that is of the same type and is in a normal state is present in the machine tool, the machine tool can substitute the normal tool for use in machining. On the other hand, if a substitutable tool is not present in the machine tool, the machine tool cannot proceed with workpiece machining. In this case, it is necessary for the machine tool to stop workpiece machining until a new tool is loaded.

Therefore, there is desire for the ability to more appropriately determine a collection priority for a tool in accordance with the presence or absence of a substitutable tool. Note that Patent Document 1 does not disclose such technology.

### Solution to Problem

In an aspect of the present disclosure, a machine tool includes a magazine configured to hold a plurality of tools, a machining body configured to machine a workpiece using at least one tool among the plurality of tools, and a control unit configured to control the machine tool. The control unit executes processing of acquiring tool information regarding the plurality of tools. The tool information defines a type and a state for each tool among the plurality of tools. The state includes an abnormal state and a normal state. The control unit is further configured to execute processing of determining, as a collection candidate tool, a tool in the abnormal state for which a tool of the same type in the normal state is not present in the magazine, based on the tool information, and predetermined processing regarding the collection candidate tool.

In an aspect of the present disclosure, the machine tool further includes a drive unit configured to drive the magazine. The predetermined processing includes processing of controlling the drive unit to move the collection candidate tool to a predetermined position.

In an aspect of the present disclosure, the machine tool further includes a display unit. The predetermined processing includes processing of displaying information regarding the collection candidate tool on the display unit.

In an aspect of the present disclosure, the abnormal state includes a damaged state indicating that a tool is damaged, and an expired state indicating that a lifespan of a tool is expired. In the determining processing, a tool in the damaged state for which a tool of the same type in the normal state is not present in the magazine is determined as a collection candidate with higher priority than a tool in the expired state for which a tool of the same type in the normal state is not present in the magazine.

In an aspect of the present disclosure, the abnormal state further includes a lifespan warning state indicating that a tool has a non-expired lifespan and also has a remaining life less than a predetermined threshold value. In the determining processing, a tool in the expired state for which a tool of the same type in the normal state is not present in the magazine is determined as a collection candidate with higher priority than a tool in the lifespan warning state for which a tool of the same type in the normal state is not present in the magazine.

In an aspect of the present disclosure, in the determining processing, a tool in the abnormal state for which a tool of the same type in the normal state is not present in the magazine is determined as a collection candidate with higher priority than a tool in the abnormal state for which a tool of the same type in the normal state is present in the magazine.

In another aspect of the present disclosure, a control method for controlling a machine tool is provided. The machine tool includes a magazine configured to hold a plurality of tools, and a machining body configured to machine a workpiece using at least one tool among the plurality of tools. The control method includes a step of acquiring tool information regarding the plurality of tools. The tool information defines a type and a state of each tool among the plurality of tools. The state includes an abnormal state and a normal state. The control method further includes a step of determining, as a collection candidate tool, a tool in the abnormal state for which a tool of the same type in the normal state is not present in the magazine, based on the tool information, and a step of executing predetermined processing regarding the collection candidate tool.

In another aspect of the present disclosure, a control program for controlling a machine tool is provided. The machine tool include a magazine configured to hold a plurality of tools, and a machining body configured to machine a workpiece using at least one tool among the plurality of tools. The control program causes the machine tool to execute a step of acquiring tool information regarding the plurality of tools. The tool information defines a type and a state of each tool among the plurality of tools. The state includes an abnormal state and a normal state. The control program further causes the machine tool to execute a step of determining, as a collection candidate tool, a tool in the abnormal state for which a tool of the same type in the normal state is not present in the magazine, based on the tool information, and predetermined processing regarding the collection candidate tool.

These and other objects, features, aspects, and advantages of the present invention will become apparent from the following detailed description of the invention, taken in conjunction with the accompanying drawings.

### Brief Description of Drawings

FIG. 1 is a diagram showing the appearance of a machine tool.
FIG. 2 is a diagram showing an example of a drive mechanism of the machine tool.
FIG. 3 is a diagram schematically showing processing for determining a collection candidate from among tools held in a magazine.
FIG. 4 is a diagram showing an example of a functional configuration of the machine tool.
FIG. 5 is a diagram showing an example of a data structure of tool information.
FIG. 6 is a diagram showing an example of collection rules.
FIG. 7 is a diagram showing an operation screen of an operation panel.
FIG. 8 is a diagram showing an operation screen according to a variation.
FIG. 9 is a diagram showing an example of a hardware configuration of a CPU (Central Processing Unit) unit.
FIG. 10 is a diagram showing an example of a hardware configuration of a CNC (Computer Numerical Control) unit.
FIG. 11 is a diagram showing an example of a hardware configuration of the operation panel.
FIG. 12 is a flowchart showing part of processing executed by a control unit of the machine tool.

### Description of Embodiments

Hereinafter, embodiments of the present invention will be described with reference to the drawings. In the following description, parts and constituent elements that are the same are denoted by the same reference numerals. They also have the same names and functions. Therefore, detailed description thereof will not be repeated. Note that the embodiments and the variations described below may be selectively combined as appropriate.

### <A. Machine tool 100>

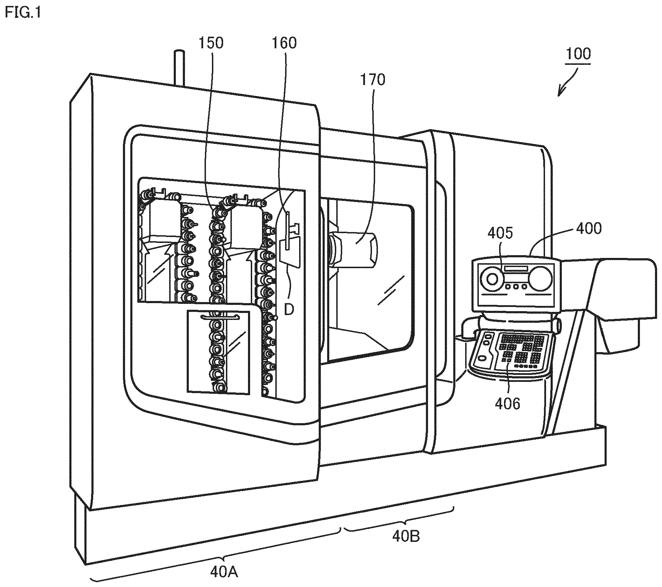

First, a machine tool 100 according to an embodiment will be described with reference to FIG. 1. FIG. 1 is a diagram showing the appearance of the machine tool 100.

The term "machine tool" as used in the present specification is a concept that includes various types of devices that have the function of processing a workpiece. The machine tool 100 may be a horizontal machining center or a vertical machining center. Alternatively, the machine tool 100 may be a lathe, an additive processing machine, or another type of cutting machine or grinding machine.

The machine tool 100 has a tool storage unit 40A and a machining body 40B. The tool storage unit 40A and the machining body 40B are partitioned by a cover.

A magazine 150 and an ATC (Automatic Tool Changer) 160 are provided in the tool storage unit 40A. A spindle 170 is provided in the machining body 40B.

The machining body 40B processes a workpiece using at least one of various tools held in the magazine 150. More specifically, the machine tool 100 drives the magazine 150 to move one tool (hereinafter also referred to as the "next tool") that corresponds to a machining process to a first tool exchange position. The machine tool 100 also drives the spindle 170 to move the tool mounted on the spindle 170 (hereinafter also referred to as the "used tool") to a second tool exchange position. Thereafter, the ATC 160 exchanges the next tool waiting at the first tool exchange position with the used tool waiting at the second tool exchange position. Tools are exchanged via a door D provided in the partition between the machining body 40B and the tool storage unit 40A. The door D is a sliding door and is opened and closed by a drive source such as a motor. Thereafter, the spindle 170 processes the workpiece using the next tool that was mounted.

The machine tool 100 is also provided with an operation panel 400. The operation panel 400 includes a display 405 for displaying various types of information regarding machining, and operation keys 406 for receiving various types of operations performed on the machine tool 100.

### <B. Drive mechanism of machine tool 100>

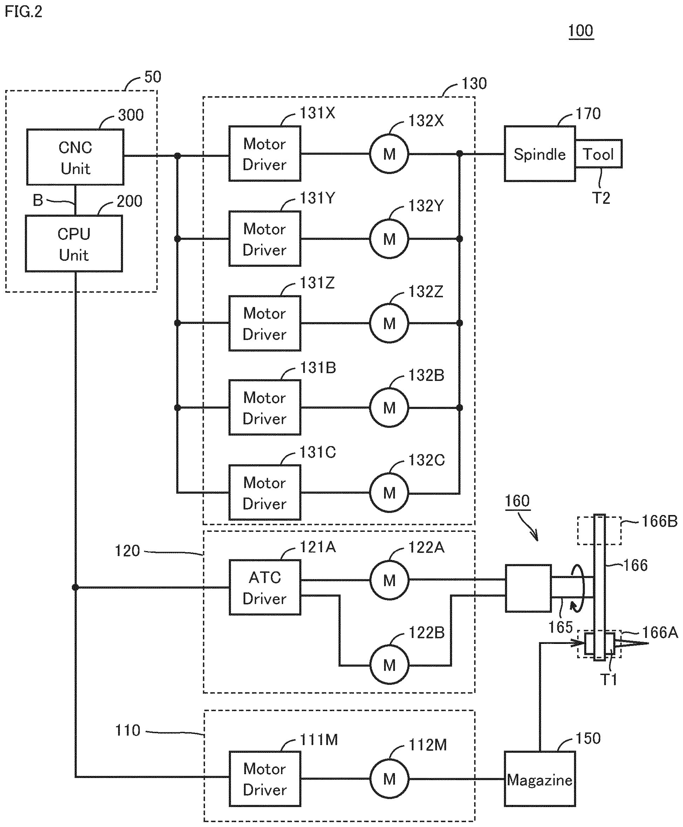

Next, various configurations of the machine tool 100 will be described with reference to FIG. 2. FIG. 2 is a diagram showing an example of the drive mechanism of the machine tool 100.

As shown in FIG. 2, the machine tool 100 includes a control unit 50, drive units 110, 120, and 130, the magazine 150, the ATC 160, and the spindle 170.

For convenience in the description, the gravitational direction will also be referred to as the "X-axis direction" below. The direction orthogonal to the X-axis on the horizontal plane will also be referred to as the "Y-axis direction". The direction orthogonal to both the X-axis direction and the Y-axis direction will also be referred to as the "Z-axis direction".

The "control unit 50" in the present specification means the device that controls the machine tool 100. The control unit 50 may have any device configuration. The control unit 50 may be constituted by a single control unit, or may be constituted by a plurality of control units. In the example shown in FIG. 2, the control unit 50 is constituted by a CPU unit 200 and a CNC unit 300.

The CPU unit 200 and the CNC unit 300 communicate with each other via a bus B, for example. The CPU unit 200 is a PLC (Programmable Logic Controller), for example.

The CPU unit 200 controls the drive unit 110 in accordance with a PLC program designed in advance. This PLC program is written using a ladder program, for example.

The drive unit 110 is a drive mechanism for driving the magazine 150 to rotate. The drive unit 110 may have any device configuration. The drive unit 110 may be constituted by a single drive unit, or may be constituted by a plurality of drive units. In the example shown in FIG. 2, the drive unit 110 is constituted by a motor driver 111M and a motor 112M.

The motor driver 111M drives the magazine 150 in accordance with control commands from the CPU unit 200. The magazine 150 is provided with the motor 112M. The motor 112M may be a servo motor, may be a stepping motor, or may be another type of motor.

As more specific processing, the motor driver 111M receives input of a target rotation speed from the CPU unit 200, and controls the motor 112M accordingly. The motor 112M drives the magazine 150 to rotate in accordance with an output current from the motor driver 111M, and drives a designated next tool T1 in the magazine 150 to a designated position.

Also, the CPU unit 200 controls the drive unit 120 in accordance with a PLC program designed in advance. The drive unit 120 is a drive mechanism for driving the ATC 160. The drive unit 120 may have any device configuration. The drive unit 120 may be constituted by a single drive unit, or may be constituted by a plurality of drive units. In the example shown in FIG. 2, the drive unit 120 is constituted by an ATC driver 121A and motors 122A and 122B.

The ATC driver 121A is a two-axis integrated driver, and controls the driving of the motors 122A and 122B connected to the ATC 160, for example. The ATC 160 includes a central shaft 165 and an arm 166. The arm 166 is a double arm that can hold two tools at the same time, for example. Specifically, the arm 166 has a tool gripper 166A that extends from the central shaft 165 toward one side in the direction orthogonal to the axial direction of the central shaft 165 (e.g., toward one side in the X-axis direction), and a tool gripper 166B that extends from the central shaft 165 toward the opposite side.

The motors 122A and 122B may be a servo motor, may be a stepping motor, or may be another type of motor. For example, the ATC driver 121A receives input of a target rotation speed for the motor 122A and input of a target rotation speed for the motor 122B from the CPU unit 200, and controls the motors 122A and 122B accordingly. The motor 122A feeds the arm 166 of the ATC 160 in accordance with an output current from the ATC driver 121A, and drives the arm 166 to any position in the axial direction of the central shaft 165. The motor 122B drives the arm 166 of the ATC 160 to rotate in accordance with an output current from the ATC driver 121A, and drives the arm 166 to any rotation angle about the central shaft 165.

In one example, the ATC 160 acquires the next tool T1 from the magazine 150 based on receiving a tool exchange command. Thereafter, the ATC 160 removes a used tool T2 from the spindle 170 and mounts the next tool T1 to the spindle 170. Thereafter, the ATC 160 stores the used tool T2, which was removed from the spindle 170, in the magazine 150.

Upon receiving a machining start command from the CPU unit 200, the CNC unit 300 starts the execution of a machining program designed in advance. This machining program is written using an NC (Numerical Control) program, for example. The CNC unit 300 drives the drive unit 130 in accordance with the machining program.

The drive unit 130 is a drive mechanism for moving the spindle 170. The drive unit 130 may have any device configuration. The drive unit 130 may be constituted by a single drive unit, or may be constituted by a plurality of drive units. In the example shown in FIG. 2, the drive unit 130 is constituted by motor drivers 131B, 131C, 131X, 131Y, and 131Z, and motors 132B, 132C, 132X, 132Y, and 132Z.

The motor driver 131B successively receives input of target rotation speeds from the CNC unit 300, and controls the motor 132B accordingly. The motor 132B drives the spindle 170 to rotate around the Y-axis direction. The motor 132B may be an AC motor, may be a stepping motor, may be a servo motor, or may be another type of motor.

In the case where the motor 132B is a servo motor, the motor driver 131B calculates an actual rotation speed of the motor 132B based on a feedback signal from an encoder (not shown) for detecting the rotation angle of the motor 132B. The motor driver 131B increases the rotation speed of the motor 132B if the calculated actual rotation speed is smaller than the target rotation speed, and decreases the rotation speed of the motor 132B if the calculated actual rotation speed is larger than the target rotation speed. In this way, the motor driver 131B brings the rotation speed of the motor 132B closer to the target rotation speed while successively receiving feedback regarding the rotation speed of the motor 132B.

The motor driver 131C successively receives input of target positions from the CNC unit 300, and controls motor 132C accordingly. The motor 132C drives the spindle 170 to rotate about the axial direction of the spindle 170. The motor 132C may be an AC motor, may be a stepping motor, may be a servo motor, or may be another type of motor. The control of the motor 132C by the motor driver 131C is performed by a method similar to the control performed by the motor driver 131B, and therefore a description thereof will not be repeated.

The motor driver 131X successively receives input of target positions from the CNC unit 300, and controls the motor 132X accordingly. The motor 132X feeds the spindle 170, and moves the spindle 170 to any position in the X-axis direction. The motor 132X may be an AC motor, may be a stepping motor, may be a servo motor, or may be another type of motor. The control of the motor 132X by the motor driver 131X is performed by a method similar to the control performed by the motor driver 131B, and therefore a description thereof will not be repeated.

The motor driver 131Y successively receives input of target positions from the CNC unit 300, and controls the motor 132Y accordingly. The motor 132Y feeds the spindle 170, and moves the spindle 170 to any position in the Y-axis direction. The motor 132Y may be an AC motor, may be a stepping motor, may be a servo motor, or may be another type of motor. The control of the motor 132Y by the motor driver 131Y is performed by a method similar to the control performed by the motor driver 131B, and therefore a description thereof will not be repeated.

The motor driver 131Z successively receives input of target positions from the CNC unit 300, and controls the motor 132Z accordingly. The motor 132Z feeds the spindle 170, and moves the spindle 170 to any position in the Z-axis direction. The motor 132Z may be an AC motor, may be a stepping motor, may be a servo motor, or may be another type of motor. The control of the motor 132Z by the motor driver 131Z is performed by a method similar to the control performed by the motor driver 131B, and therefore a description thereof will not be repeated.

### <C. Overview>

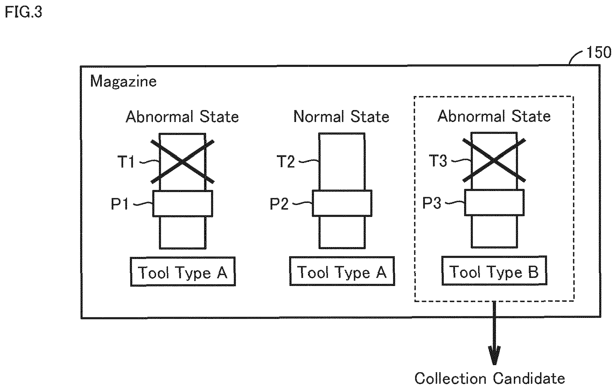

An overview of tool collection processing will be described below with reference to FIG. 3. FIG. 3 is a diagram schematically showing processing for determining a collection candidate from among the tools held in the magazine 150 described above.

The magazine 150 holds various types of tools used in workpiece machining. The magazine 150 may hold tools in a normal state as well as tools in an abnormal state.

Here, "tool in an abnormal state" means a tool in a state where the tool is not recommended to be used for machining a workpiece. Examples of tools in an abnormal state include tools that are damaged, tools whose lifespan has expired due to wear or the like, and tools whose remaining life is a predetermined time or less. Examples of types of damage to a tool include deformation of the tool caused by being subjected to excessive force, chipping of the tool cutting edge, and breakage of the tool.

On the other hand, "tool in a normal state" means a tool in a state where the tool can be used for machining a workpiece. Typically, a "tool in a normal state" is a tool that is not in an abnormal state.

Note that tools whose lifespan has expired due to wear or the like and tools whose remaining life is a predetermined time or less are merely not recommended for use, and can actually be used for machining. Therefore, a tool whose lifespan has expired due to wear or the like and a tool whose remaining life is a predetermined time or less may be deemed to be a "tool in the normal state" rather than a "tool in the abnormal state".

The magazine 150 includes a plurality of pots for holding tools. Any number of pots may be provided in the magazine 150. Three pots P1 to P3 are shown in the example of FIG. 3.

The pot P1 holds a tool T1 of the tool type "A". It is assumed that the tool T1 is in an abnormal state where the tool is not recommended to be used for machining a workpiece.

The pot P2 holds a tool T2 of the tool type "A". In other words, the tool T2 is of the same type as the tool T1. The tool T2 is in a normal state where the tool can be used for machining a workpiece.

The pot P3 holds a tool T3 of the tool type "B". It is assumed that the tool T3 is in an abnormal state where the tool is not recommended to be used for machining a workpiece. Also, it is assumed that a tool in the normal state of the tool type "B" is not present in the magazine 150.

When the tool T3 is called in the machining program, there is no other tool that can be substituted, and therefore the worker needs to load a new tool of the tool type "B" in the magazine 150. In this case, the machine tool 100 cannot proceed with machining the workpiece until the loading of the new tool is complete.

On the other hand, in the case where the tool T1 in the abnormal state is called in the machining program, since the tool T2 that is in the normal state and is of the same type as the tool T1 in the abnormal state is present in the machine tool 100, the machine tool 100 can proceed with machining the workpiece using the tool T2 instead of the tool T1.

In this way, the tool T3 for which a substitutable tool is not present has a higher replacement priority than the tool T1 for which a substitutable tool is present. In view of this, the machine tool 100 determines a collection priority for a tool in accordance with the presence or absence of a substitutable tool.

More specifically, first, the control unit 50 of the machine tool 100 acquires tool information regarding the tools held in the magazine 150. The tool information defines at least the type and the state of each tool held in the magazine 150. The state includes the above-mentioned normal state and the above-mentioned abnormal state, for example. Next, based on the acquired tool information, if there is a tool in the abnormal state for which a tool of the same type in the normal state is not present in the magazine 150, the control unit 50 determines that tool in the abnormal state to be a collection candidate. Accordingly, the control unit 50 determines that the tool T3 for which a substitutable tool is not present has a higher collection priority than the tool T1 for which a substitutable tool is present. Thereafter, the control unit 50 executes predetermined processing regarding the tool T3 that is a collection candidate. Details of this processing will be described later.

Through the above processing, the machine tool 100 can more appropriately determine a collection priority for a tool in accordance with the presence or absence of a substitutable tool. This enables avoiding the case where the machine tool 100 stops the machining of the workpiece. Alternatively, even if machining of the workpiece is stopped, the machine tool 100 can resume machining the workpiece more quickly.

### <D. Functional configuration of machine tool 100>

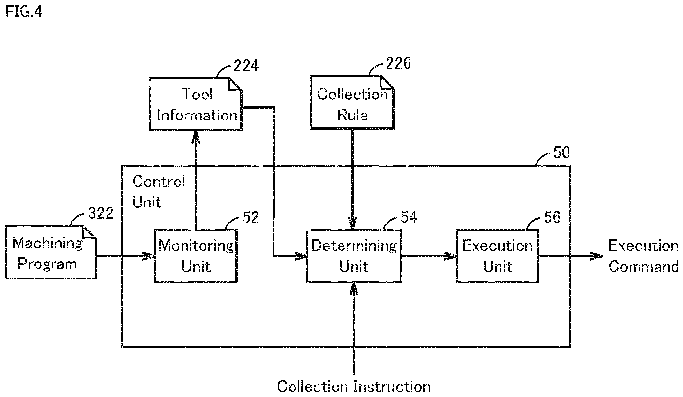

Next, the functional configuration of the machine tool 100 will be described with reference to FIGS. 4 to 7. FIG. 4 is a diagram showing an example of the functional configuration of the machine tool 100.

As shown in FIG. 4, the control unit 50 of the machine tool 100 includes a monitoring unit 52, a determining unit 54, and an execution unit 56 as functional components. These configurations will be described below in order.

Note that the functional components may be in any arrangement. Some or all of the functional components shown in FIG. 4 may be implemented in the above-described CPU unit 200 (see FIG. 2), may be implemented in the above-described CNC unit 300 (see FIG. 2), or may be implemented in the above-described operation panel 400 (see FIG. 1). In one example, the monitoring unit 52 is implemented in the CNC 300. The determining unit 54 and the execution unit 56 are each implemented in the CPU unit 200 or the operation panel 400, for example. In another example, some of the functional components shown in FIG. 4 may be implemented in an external device such as a server.

### (D1. Monitoring unit 52)

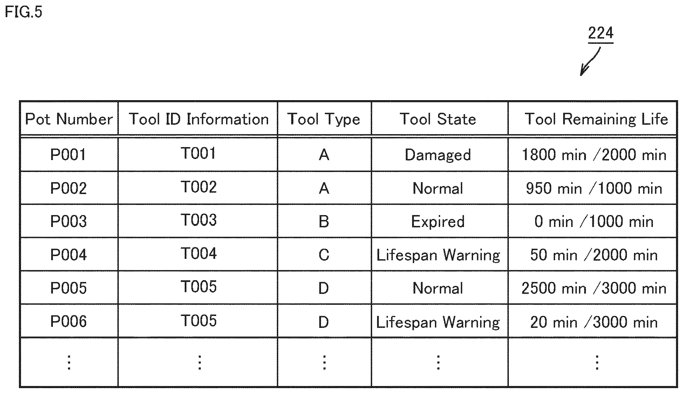

First, functions of the monitoring unit 52 shown in FIG. 4 will be described with reference to FIG. 5.

The monitoring unit 52 monitors the states of the tools stored in the machine tool 100. The states of the tools are managed in tool information 224 shown in FIG. 5, for example. FIG. 5 is a diagram showing an example of the data structure of the tool information 224.

In the tool information 224, tool identification information, a tool type, a tool state, and a tool remaining life are associated with each pot number in the magazine 150.

The pot numbers defined in the tool information 224 are information for uniquely identifying storage locations in the magazine 150. Typically, the pot numbers defined in the tool information 224 are assigned to the pots in advance.

The tool identification information specified in the tool information 224 is information for uniquely identifying a tool. The identification information is assigned in advance by a setting operation performed by a user, for example. The identification information may be indicated by a tool number such as an ID, or may be indicated by a tool name.

The tool type defined in the tool information 224 is information for uniquely identifying the type of tool. The tool type is assigned in advance by a setting operation performed by the user, for example. The tool type may be indicated by a type number such as an ID, or may be indicated by a type name.

The monitoring unit 52 monitors the loading and removal of tools to and from the magazine 150 by a worker, and successively updates the tool information 224. More specifically, a tool to be mounted is loaded by the worker to the magazine 150. A barcode or QR code (registered trademark) reading device (not shown) is provided near the position where the tool is loaded, and the reading device reads a barcode or a QR code provided on the tool. The identification information and the tool type of the tool to be mounted are read in this way. The monitoring unit 52 writes the read tool information and the read tool type to the tool information 224 in association with the pot number of the tool loading location.

The tool state defined in the tool information 224 includes the above-described normal state and the above-described abnormal state, for example. Examples of the abnormal state include a "damaged state", which indicates that the tool is damaged, an "expired state", which indicates that the lifespan of the tool has expired, and a "lifespan warning state", which indicates that the tool has a non-expired lifespan and has a remaining life less than a predetermined threshold value, for example.

Whether or not the tool is in the "damaged state" is detected by a damage sensor provided in the machine tool 100, for example. In one example, the damage sensor includes a pressure sensor provided on the spindle 170 in the machine tool 100. The pressure sensor detects the force applied to the spindle 170 during workpiece machining. The monitoring unit 52 monitors the output value of the pressure sensor, and determines that excessive force has been applied to the tool if the output value exceeds a predetermined value. In the case of determining that excessive force has been applied to the tool, the monitoring unit 52 determines that the tool may have been bent, and changes the state of the tool to "damaged state".

In another example, the damage sensor includes a tool profile measurement sensor. The measurement sensor is a distance sensor, a touch sensor, or another sensor capable of detecting the profile of the tool, for example. A one example, an example will be described in which damage to a tool is detected using a distance sensor. The machine tool 100 rotates the tool mounted to the spindle 170 in front of the distance sensor and acquires time series data representing the profile of the tool from the distance sensor. The monitoring unit 52 calculates the difference between the time series data and a predetermined normal value, and determines that the tool has a chipped edge if the absolute value of the difference result exceeds a predetermined value. In the case of determining that the tool has a chipped edge, the monitoring unit 52 changes the state of the tool to "damaged state".

In another example, the damage sensor includes a camera for capturing images of a tool in the machine tool 100. The monitoring unit 52 determines whether or not a tool is damaged by performing predetermined image processing on an image obtained from the camera. In the case of determining that the tool is damaged, the monitoring unit 52 changes the state of the tool to "damaged state".

In one example, whether or not a damaged tool appears in an image is recognized using a trained model. The trained model is generated in advance by training processing performed using a training data set. The training data set includes a plurality of training images in which tools are shown. Each of the training images is associated with a label indicating whether or not a normal tool appears in the image (or a label indicating the type of damage). The internal parameters of the trained model have been optimized in advance through training processing performed using such a training data set.

Various machine learning algorithms can be adopted as the training method for generating the trained model. For example, deep learning, a convolutional neural network (CNN), a full-layer convolutional neural network (FCN), a support vector machine, or the like is adopted as the machine learning algorithm.

The monitoring unit 52 sequentially shifts a rectangular area on an input image obtained from the camera and inputs the partial image in the rectangular area to the trained model. As a result, the trained model outputs a probability that a damaged tool appears in the input partial image. If the probability exceeds a predetermined value, the monitoring unit 52 determines that a damaged tool appears in the partial image, and changes the state of the tool to "damaged state".

The "expired state" and the "lifespan warning state" are determined based on a machining program 322 of the machine tool 100, for example. As more specific processing, the monitoring unit 52 monitors the machining program 322 and determines whether or not the tools are being used for machining. When a tool is in use, the monitoring unit 52 counts down the corresponding remaining life indicated in the tool information 224. The remaining life of a new tool is determined in advance for each tool.

The term "remaining life" used herein refers to the amount that a tool can be used (usable amount) before the lifespan of the tool expires. The term "amount" is a concept that includes time, distance, and frequency. In other words, the "remaining usable amount of a tool" is a concept that includes the remaining time that the tool can be used before the lifespan of the tool expires, the remaining distance that the tool can move before the lifespan of the tool expires, and the remaining number of times the tool can be used before the lifespan of the tool expires.

An example of a method for monitoring the remaining life of a tool will be described below. The machining program 322 of the machine tool 100 is defined in G code, and includes a tool exchange command for designating a tool to be mounted to the spindle 170, and drive commands for rotating/feeding the spindle 170 and the tool, for example. The monitoring unit 52 specifies the type of tool to be used for workpiece machining based on the tool exchange command defined in the machining program 322. Next, when a drive command defined in the machining program 322 is executed, the monitoring unit 52 starts counting down the remaining life of the tool. Subsequently, when a stop command or the last command defined in the machining program 322 is executed, the monitoring unit 52 stops counting down the remaining life of the tool. In this way, the monitoring unit 52 monitors the remaining life of each tool in the tool information 224.

When the remaining life of a tool falls below a predetermined threshold value, the monitoring unit 52 changes the state of the tool from "normal state" to "lifespan warning state" in the tool information 224. Furthermore, when the remaining life of a tool becomes zero, the monitoring unit 52 changes the state of the tool from "lifespan warning state" to "expired state" in the tool information 224.

### (D2. Determining unit 54)

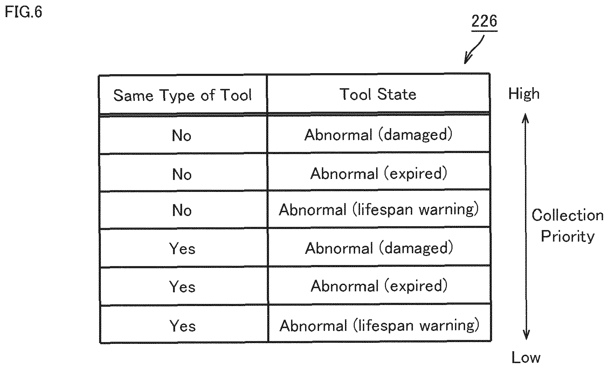

Next, functions of the determining unit 54 shown in FIG. 4 will be described with reference to FIG. 6.

The determining unit 54 determines a collection candidate tool from among the tools held in the magazine 150 in accordance with whether or not a substitutable tool is present.

In the following, for convenience of description, a tool in the abnormal state for which another tool of the same type in the normal state is present in the magazine 150 will be referred to as a "substitutable tool in the abnormal state", and a tool for which a tool of the same type in the normal state is not present in the magazine 150 will be referred to as an "unsubstitutable tool in the abnormal state". The abnormal state includes the above-described "damaged state", the above-described "expired state", and the above-described "lifespan warning state".

In one example, the determining unit 54 determines a collection candidate priority for a tool in accordance with collection rules 226 shown in FIG. 6. FIG. 6 is a diagram showing an example the collection rules 226.

More specifically, the determining unit 54 determines that an unsubstitutable tool in the abnormal state has a higher collection candidate priority than a substitutable tool in the abnormal state. As a result, an unsubstitutable tool in the abnormal state is determined to be a collection candidate with higher priority.

If there are a plurality of unsubstitutable tools in the abnormal state, the determining unit 54 determines a collection candidate priority for each of such tools in accordance with the tool states.

More specifically, a tool in the damaged state cannot be used for workpiece machining. On the other hand, a tool in the expired state is not recommended for use, but can still be used for machining. Therefore, it is preferable that a tool in the damaged state is replaced with priority over a tool in the expired state. In view of this point, the determining unit 54 determines that an unsubstitutable tool in the damaged state has a higher collection candidate priority than an unsubstitutable tool in the expired state.

Also, a tool in the expired state needs to be replaced more quickly than a tool in the lifespan warning state. In view of this, the determining unit 54 determines that an unsubstitutable tool in the expired state has a higher collection candidate priority than an unsubstitutable tool in the lifespan warning state.

Preferably, the determining unit 54 also determines a collection candidate priority for substitutable tools in the abnormal state. In one example, the determining unit 54 determines that a substitutable tool in the damaged state has a higher collection candidate than a substitutable tool in the expired state. Also, the determining unit 54 determines that a substitutable tool in the expired state has a higher collection candidate priority than a substitutable tool in the lifespan warning state.

### (D3. Execution unit 56)

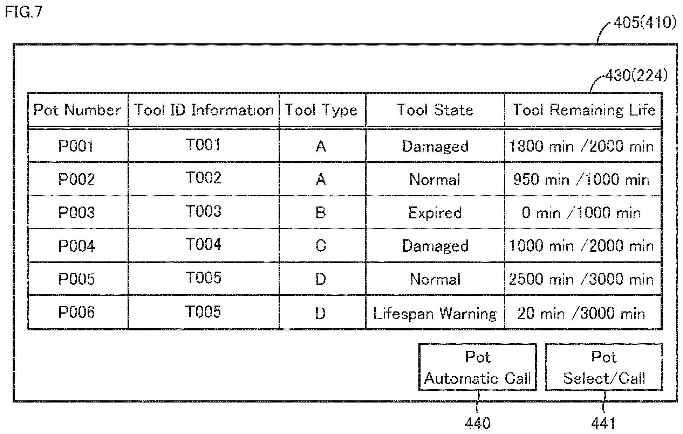

Next, functions of the execution unit 56 shown in FIG. 4 will be described with reference to FIG. 7. The execution unit 56 executes predetermined processing regarding a collection candidate tool determined by the determining unit 54.

In one example, the execution unit 56 controls the above-described drive unit 110 (see FIG. 2) so as to move a collection candidate tool to a predetermined position. This control processing is executed in the case where a collection operation performed by a user has been received, for example. The collection operation is received on the operation panel 400 described above (see FIG. 1), for example.

FIG. 7 is a diagram showing an operation screen 410 of the operation panel 400. The operation screen 410 is displayed on the display 405 of the operation panel 400, for example.

As shown in FIG. 7, the operation screen 410 includes a display field 430, an automatic call button 440, and a select/call button 441. Part or all of the above-described tool information 224 (see FIG. 5) is displayed in the display field 430.

The automatic call button 440 is a button for calling a collection candidate tool that has been determined by the above-described determining unit 54. More specifically, if the automatic call button 440 on the operation screen 410 is pressed, the execution unit 56 specifies the tool having the highest collection priority among the collection candidate tools determined by the determining unit 54. Next, the execution unit 56 controls the above-described drive unit 110 (see FIG. 2) so as to drive the specified tool to the predetermined position. Thereafter, the worker can replace the tool moved to the predetermined position with a tool in the normal state.

Next, the execution unit 56 controls the above-described drive unit 110 (see FIG. 2) so as to move the tool having the second highest collection priority among the collection candidate tools to the predetermined position. Thereafter, the worker replaces the tool moved to the predetermined position with a tool in the normal state.

In this manner, the execution unit 56 moves the tools that are collection candidates determined by the determining unit 54 to the predetermined position in order of priority. Accordingly, a tool in the abnormal state for which a substitutable tool is not present can be replaced by the worker with priority.

The select/call button 441 is a button for calling a specific tool. The user can call a selected tool from the magazine 150 by selecting that tool from the tool information displayed in the display field 430 and then pressing the select/call button 441.

Note that, in the above description, an example has been described in which collection candidate tools determined by the determining unit 54 are driven to the predetermined position in order of priority, but a configuration is also possible in which only the tool having the highest collection priority is driven to the predetermined position, and a configuration is also possible in which a predetermined number of tools having the highest collection priorities are driven to the predetermined position.

### <E. Variation>

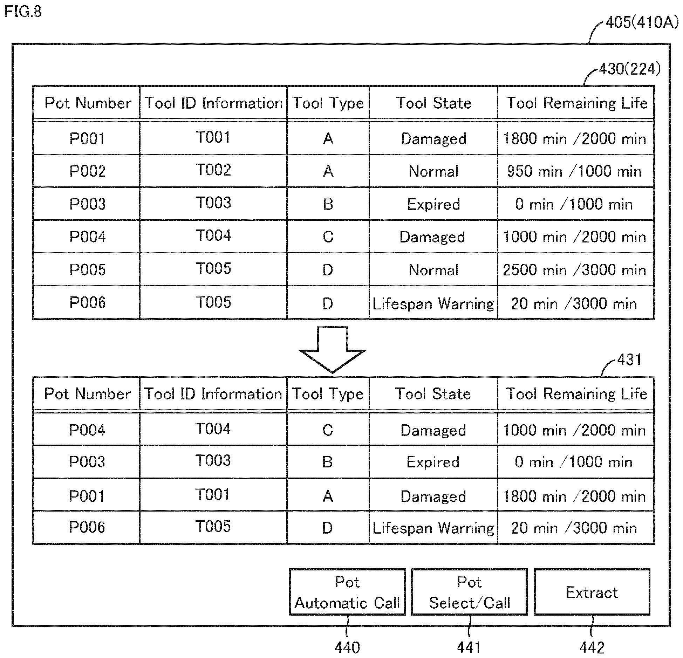

Next, a variation of the above-described operation screen 410 will be described with reference to FIG. 8. FIG. 8 is a diagram showing an operation screen 410A according to a variation.

The operation screen 410A shown in FIG. 8 differs from the above-described operation screen 410 shown in FIG. 7 in that the operation screen 410A further includes a display field 431 and an extract button 442. Other aspects are the same as the operation screen 410 shown in FIG. 7, and therefore the description of such aspects points will not be repeated below.

In this example, if the user presses the extract button 442, the execution unit 56 displays information regarding collection candidate tools determined by the determining unit 54 on the display 405 (display unit). This information is displayed in the display field 431 of the operation screen 410A, for example. The information the displayed in the display field 431 includes at least one piece of information among the pot number in the magazine 150, tool identification information, tool type, tool state, and tool remaining life, for example.

Preferably, the execution unit 56 displays information regarding the collection candidate tools determined by the determining unit 54 in the display field 431 in order of collection priority. The pieces of tool information displayed in the display field 431 are selectable. The user can call a selected tool from the magazine 150 by selecting a piece of tool information displayed in the display field 431 and pressing the select/call button 441. The user can thus check for the piece of tool information that has the highest collection priority before performing tool replacement.

Note that the execution unit 56 may display only the one piece of tool information that has the highest collection priority in the display field 431. Alternatively, the execution unit 56 may display a predetermined number of pieces of tool information that have the highest collection priorities in the display field 431.

### <F. Hardware configuration of CPU unit 200>

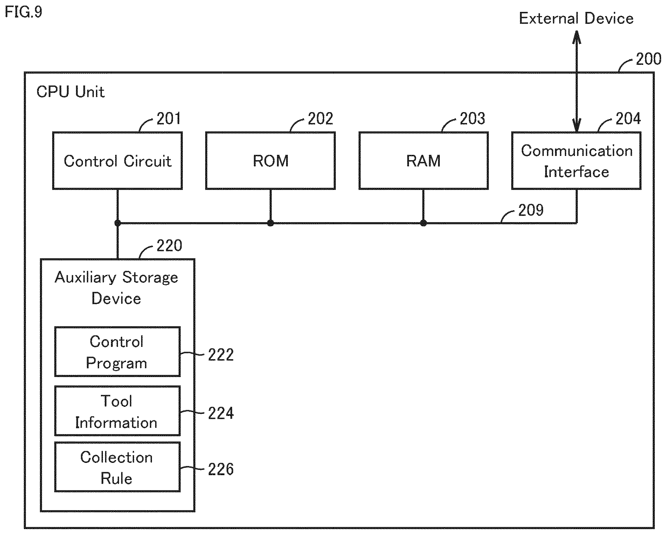

The hardware configuration of the above-described CPU unit 200 shown in FIG. 2 will be described below with reference to FIG. 9. FIG. 9 is a diagram showing an example of the hardware configuration of the CPU unit 200.

The CPU unit 200 includes a control circuit 201, a ROM (Read Only Memory) 202, a RAM (Random Access Memory) 203, a communication interface 204, and an auxiliary storage device 220. These components are connected to an internal bus 209.

The control circuit 201 is constituted by at least one integrated circuit, for example. An integrated circuit may be constituted by at least one CPU, at least one GPU (Graphics Processing Unit), at least one ASIC (Application Specific Integrated Circuit), at least one FPGA (Field Programmable Gate Array), or a combination thereof, for example.

The control circuit 201 controls the operation of the CPU unit 200 by executing various programs, such as a control program 222. The control program 222 is a program for realizing functions related to the functional components shown in FIG. 4 described above. Upon receiving an execution command for the control program 222, the control circuit 201 reads the control program 222 from the auxiliary storage device 220 or the ROM 202 to the RAM 203. The RAM 203 functions as a working memory and temporarily stores various types of data necessary for executing the control program 222.

The communication interface 204 is an interface for performing periodic communication with an external device using a field network. Examples of the external device include the above-described motor driver 111M (see FIG. 2), and the above-described ATC driver 121A (see FIG. 2). The field network is configured by adopting EtherCAT (registered trademark), EtherNet/IP (registered trademark), CC-Link (registered trademark), CompoNet (registered trademark), or the like.

The auxiliary storage device 220 is a storage medium such as a hard disk or a flash memory, for example. The auxiliary storage device 220 stores the control program 222, the above-described tool information 224, the above-described collection rules 226, and the like.

Note that the control program 222, the tool information 224, and the collection rules 226 are not limited to being stored in the auxiliary storage device 220, and can also be stored in a storage area (e.g., a cache memory) of the control circuit 201, the ROM 202, the RAM 203, an external device (e.g., a server), or the like.

Furthermore, rather than being a standalone program, the control program 222 may be provided as part of a program. In this case, various types of processing pertaining to the present embodiment are realized in cooperation with the program. Even if the program does not include such a portion of modules, the program does not depart from the spirit of the control program 222 pertaining to the present embodiment. Also, some or all of the functions provided by the control program 222 may be realized by dedicated hardware. Furthermore, the CPU unit 200 may be configured in a mode such as a so-called cloud service in which at least one server executes a part of the processing of the control program 222.

### <G. Hardware configuration of CNC unit 300>

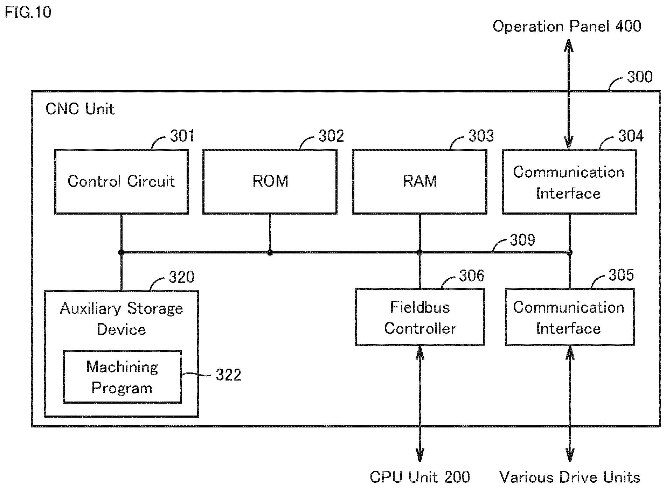

Next, the hardware configuration of the above-described CNC unit 300 shown in FIG. 2 will be described with reference to FIG. 10. FIG. 10 is a diagram showing an example of the hardware configuration of the CNC unit 300.

The CNC unit 300 includes a control circuit 301, a ROM 302, a RAM 303, a communication interface 304, a communication interface 305, a fieldbus controller 306, and an auxiliary storage device 320. These components are connected to an internal bus 309.

The control circuit 301 is constituted by at least one integrated circuit, for example. An integrated circuit may be constituted by at least one CPU, at least one GPU, at least one ASIC, at least one FPGA, or a combination thereof, for example.

The control circuit 301 controls the operation of the CNC unit 300 by executing various programs, such as a machining program 322. The machining program 322 is a program for realizing workpiece machining. Upon receiving an execution command for the machining program 322, the control circuit 301 reads the machining program 322 from the ROM 302 to the RAM 303. The RAM 303 functions as a working memory and temporarily stores various types of data necessary for executing the machining program 322.

A LAN, a WLAN, Bluetooth (registered trademark), or the like is connected to the communication interface 304. The CNC unit 300 exchanges data with an external device via the communication interface 304. Examples of the external device include the operation panel 400 and a server (not shown).

The communication interface 305 is an interface for realizing communication with an external device. In one example, the CNC unit 300 exchanges data with an external device via the communication interface 305. Examples of the external device include various drive units for workpiece machining (e.g., the above-described motor drivers 131B, 131C, and 131X to 131Z).

The fieldbus controller 306 is a communication unit for realizing communication with various units connected to a fieldbus. One example of a unit connected to the fieldbus is the CPU unit 200.

The auxiliary storage device 320 is a storage medium such as a hard disk or a flash memory, for example. The auxiliary storage device 320 stores the machining program 322 and the like. Note that the machining program 322 is not limited to being stored in the auxiliary storage device 320, and can also be stored in a storage area (e.g., a cache memory) of the control circuit 301, the ROM 302, the RAM 303, an external device (e.g., a server), or the like.

### <H. Hardware configuration of operation panel 400>

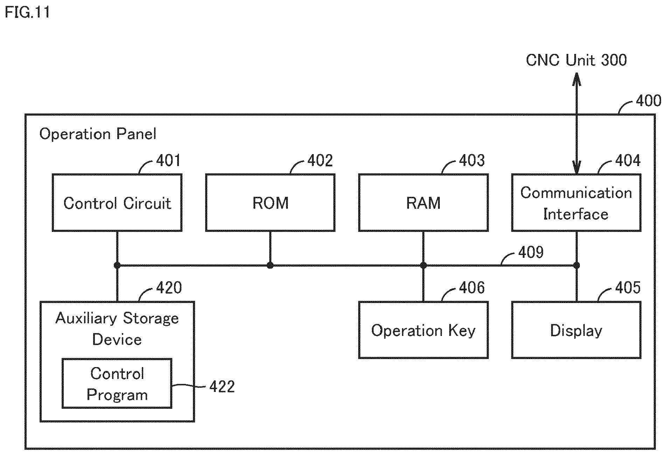

Next, the hardware configuration of the above-described operation panel 400 shown in FIG. 2 will be described with reference to FIG. 11. FIG. 11 is a diagram showing an example of the hardware configuration of the operation panel 400.

The operation panel 400 includes a control circuit 401, a ROM (Read Only Memory) 402, a RAM (Random Access Memory) 403, a communication interface 404, a display 405, operation keys 406, and an auxiliary storage device 420. These components are connected to an internal bus 409.

The control circuit 401 is constituted by at least one integrated circuit, for example. An integrated circuit may be constituted by at least one CPU, at least one GPU, at least one ASIC, at least one FPGA, or a combination thereof, for example.

The control circuit 401 controls the operation of the operation panel 400 by executing various programs, such as a control program 422. The control program 422 defines commands for controlling the operation panel 400. Upon receiving an execution command for the control program 422, the control circuit 401 reads the control program 422 from the auxiliary storage device 420 or the ROM 402 to the RAM 403. The RAM 403 functions as a working memory and temporarily stores various types of data necessary for executing the control program 422.

The communication interface 404 is a communication unit for realizing communication using a LAN (Local Area Network) cable, a WLAN, Bluetooth (registered trademark), or the like. In one example, the operation panel 400 realizes communication with an external device such as the above-described CNC unit 300 via the communication interface 404.

The display 405 is a liquid crystal display, an organic EL display, or another display device, for example. The display 405 transmits an image signal for displaying an image to the display 405 in accordance with a command from the control circuit 401 or the like. The display 405 is constituted by a touch panel, for example, and receives various operations performed on the machine tool 100 through touch operations.

The operation keys 406 are constituted by a plurality of hardware keys, and receive various user operations performed on the operation panel 400. Signals corresponding to pressed keys are output to control circuit 401.

The auxiliary storage device 420 is a storage medium such as a hard disk or a flash memory, for example. The auxiliary storage device 420 stores the control program 422 and the like. Note that the control program 422 is not limited to being stored in the auxiliary storage device 420, and can also be stored in a storage area (e.g., a cache memory) of the control circuit 401, the ROM 402, the RAM 403, an external device (e.g., a server), or the like.

### <I. Flowchart>

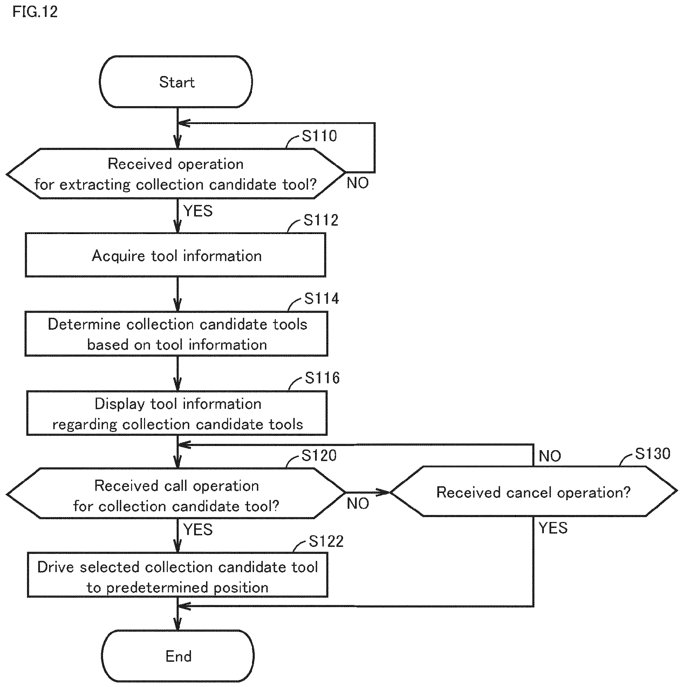

Next, the control structure of the machine tool 100 will be described with reference to FIG. 12. FIG. 12 is a flowchart showing part of the processing executed by the control unit 50 of the machine tool 100.

The processing shown in FIG. 12 is realized by the control unit 50 executing the above-described control program 222 (see FIG. 9), for example. In other aspects, some or all of the processing may be executed by circuit elements or other hardware.

In step S110, the control unit 50 determines whether or not an operation for extracting a collection candidate tool from among the tools held in the magazine 150 has been received. The extraction operation is received based on the above-described extract button 442 (see FIG. 8) being pressed, for example. In the case of determining that an operation for extracting a collection candidate tool was received (YES in step S110), the control unit 50 switches the control to step S112. In the other case (NO in step S1 10), the control unit 50 executes the processing of step S110 again.

In step S112, the control unit 50 acquires the above-described tool information 224 (see FIG. 5). As described above, the tool information 224 defines information regarding the tools held in the magazine 150.

In step S114, the control unit 50 functions as the above-described determining unit 54 (see FIG. 4), and determines collection candidate tools from among the tools held in the magazine 150 based on the tool information 224 acquired in step S112. The method for determining the collection candidate tools is as described above, and therefore the description thereof will not be repeated.

In step S116, the control unit 50 functions as the above-described execution unit 56 (see FIG. 4), and displays tool information regarding the collection candidate tools determined in step S 114 in the display field 431 of the above-described operation screen 410A.

In step S120, the control unit 50 determines whether or not a call operation for a collection candidate tool was received. In one example, in the case where on one or more pieces of tool information displayed in the display field 431 was selected, and the select/call button 441 on the operation screen 410A was pressed, the control unit 50 determines that the call operation was received. In the case of determining that the call operation was received for a collection candidate tool (YES in step S120), the control unit 50 switches the control to step S122. In the other case (NO in step S120), the control unit 50 switches the control to step S130.

In step S122, the control unit 50 functions as the above-described execution unit 56 (see FIG. 4), and moves the collection candidate tool selected in the display field 431 of the above-described operation screen 410A to the predetermined position. After that, the control unit 50 ends the processing shown in FIG. 12.

In step S130, the control unit 50 determines whether or not a cancel operation was received. The cancel operation is received based on, for example, the pressing of a cancel button (not shown) provided on the above-described operation screen 410A. Alternatively, the cancel operation is received based on the pressing of a button (not shown) for closing the above-described operation screen 410A. In the case of determining that the cancel operation was received (YES in step S130), the control unit 50 ends the processing shown in FIG. 12. In the other case (NO in step S130), the control unit 50 returns the control to step S120.

### <1. Summary>

As described above, the machine tool 100 acquires the tool information 224 regarding the tools held in the magazine 150. The tool information 224 defines at least the type of each tool held in the magazine 150 and the state of each of the tools. The state includes the above-described normal state and the above-described abnormal state, for example. Next, based on the acquired tool information 224, the control unit 50 determines, as a collection candidate, a tool in the abnormal state for which a tool of the same type in the normal state is not present in the magazine 150. Accordingly, the control unit 50 determines that a tool for which a substitutable tool is not present has a higher collection candidate priority than a tool for which a substitutable tool is present.

Accordingly, the machine tool 100 can more appropriately determine a collection priority for a tool in accordance with the presence or absence of a substitutable tool. As a result, it is possible to avoid the case where the machine tool 100 stops the machining of a workpiece. Alternatively, even if machining of the workpiece is stopped, the machine tool 100 can resume machining the workpiece more quickly.

The embodiments disclosed herein are intended to be considered to be illustrative in all respects and not restrictive. The scope of the present invention is indicated by the claims rather than the above description, and it is intended that equivalent meanings and all changes within the scope of the claims are included.

### List of Reference Numerals

- 40A: Tool storage unit
- 40B: Machining body
- 50: Control unit
- 52: Monitoring unit
- 54: Determining unit
- 56: Execution unit
- 100: Machine tool
- 110: Drive unit
- 111M: Motor driver
- 112M: Motor
- 120: Drive unit
- 121A: ATC driver
- 122A: Motor
- 122B: Motor
- 130: Drive unit
- 131B: Motor driver
- 131C: Motor driver
- 131X: Motor driver
- 131Y: Motor driver
- 131Z: Motor driver
- 132B: Motor
- 132C: Motor
- 132X: Motor
- 132Y: Motor
- 132Z: Motor
- 150: Magazine
- 165: Central shaft
- 166: Arm
- 166A: Tool gripper
- 166B: Tool gripper
- 170: Spindle
- 200: CPU unit
- 201: Control circuit
- 202: ROM
- 203: RAM
- 204: Communication interface
- 209: Internal bus
- 220: Auxiliary storage device
- 222: Control program
- 224: Tool information
- 226: Collection rule
- 300: CNC unit
- 301: Control circuit
- 302: ROM
- 303: RAM
- 304: Communication interface
- 305: Communication interface
- 306: Fieldbus controller
- 309: Internal bus
- 320: Auxiliary storage device
- 322: Machining program
- 400: Operation panel
- 401: Control circuit
- 402: ROM
- 403: RAM
- 404: Communication interface
- 405: Display
- 406: Operation key
- 409: Internal bus
- 410: Operation screen
- 410A: Operation screen
- 420: Auxiliary storage device
- 422: Control program
- 430: Display field
- 431: Display field
- 440: Automatic call button
- 441: Select/call button
- 442: Extract button

## Claims

1. A machine tool comprising:
a magazine configured to hold a plurality of tools;
a machining body configured to machine a workpiece using at least one tool among the plurality of tools; and
a control unit configured to control the machine tool,
wherein the control unit executes processing of acquiring tool information regarding the plurality of tools, the tool information defining a type and a state for each tool among the plurality of tools, and the state including an abnormal state and a normal state, and
the control unit is further configured to execute
processing of determining, as a collection candidate tool, a tool in the abnormal state for which a tool of the same type in the normal state is not present in the magazine, based on the tool information, and
predetermined processing regarding the collection candidate tool.

2. The machine tool according to claim 1, further comprising:
a drive unit configured to drive the magazine,
wherein the predetermined processing includes processing of controlling the drive unit to move the collection candidate tool to a predetermined position.

3. The machine tool according to claim 1 or 2, further comprising:
a display unit,
wherein the predetermined processing includes processing of displaying information regarding the collection candidate tool on the display unit.

4. The machine tool according to any one of claims 1 to 3,
wherein the abnormal state includes
a damaged state indicating that a tool is damaged, and
an expired state indicating that a lifespan of a tool is expired, and
in the determining processing, a tool in the damaged state for which a tool of the same type in the normal state is not present in the magazine is determined as a collection candidate with higher priority than a tool in the expired state for which a tool of the same type in the normal state is not present in the magazine.

5. The machine tool according to claim 4,
wherein the abnormal state further includes a lifespan warning state indicating that a tool has a non-expired lifespan and also has a remaining life less than a predetermined threshold value, and
in the determining processing, a tool in the expired state for which a tool of the same type in the normal state is not present in the magazine is determined as a collection candidate with higher priority than a tool in the lifespan warning state for which a tool of the same type in the normal state is not present in the magazine.

6. The machine tool according to any one of claims 1 to 3,
wherein in the determining processing, a tool in the abnormal state for which a tool of the same type in the normal state is not present in the magazine is determined as a collection candidate with higher priority than a tool in the abnormal state for which a tool of the same type in the normal state is present in the magazine.

7. A control method for controlling a machine tool,
the machine tool including:
a magazine configured to hold a plurality of tools; and
a machining body configured to machine a workpiece using at least one tool among the plurality of tools,
the control method comprising:
a step of acquiring tool information regarding the plurality of tools, the tool information defining a type and a state of each tool among the plurality of tools, and the state including an abnormal state and a normal state, and
the control method further comprising:
a step of determining, as a collection candidate tool, a tool in the abnormal state for which a tool of the same type in the normal state is not present in the magazine, based on the tool information; and
and a step of executing predetermined processing regarding the collection candidate tool.

8. A control program for controlling a machine tool,
the machine tool including:
a magazine configured to hold a plurality of tools; and
a machining body configured to machine a workpiece using at least one tool among the plurality of tools,
the control program causing the machine tool to execute
a step of acquiring tool information regarding the plurality of tools, the tool information defining a type and a state of each tool among the plurality of tools, and the state including an abnormal state and a normal state, and
the control program further causing the machine tool to execute:
a step of determining, as a collection candidate tool, a tool in the abnormal state for which a tool of the same type in the normal state is not present in the magazine, based on the tool information; and
predetermined processing regarding the collection candidate tool.
